# DEMANDE DE BREVET EUROPEEN

(11) **EP 4 625 179 A1**
(43) Date de publication de la demande: **01.10.2025**
(21) Numéro de dépôt: 25165601.3
(22) Date de dépôt: 24.03.2025
(51) Int. Cl.: G06F 11/3668, G06F 12/14, G06F 12/02

(54) **PROCEDE ET DISPOSITIF D AIDE AU DEVELOPPEMENT DE LOGICIELS EMBARQUES**

(30) Priorité: 27.03.2024 FR 2403077
(71) Demandeur: STMicroelectronics International N.V., 1228 Plan-les-Ouates, Geneva (CH)
(72) Inventeur: JANIN, Yves, 38019 Grenoble Cedex 1 (FR); MARTIN, Stéphane, 38610 Gières (FR); GOBIN, Pierre, 38000 Seyssinet-Pariset (FR)
(74) Mandataire: Casalonga

(57) **Abrégé**

Il est proposé un procédé de contrôle d'accès mémoire pour un programme d'ordinateur embarqué, en phase de développement, le programme d'ordinateur étant exécuté dans un dispositif comprenant une unité de mémoire (115), l'unité de mémoire comprenant un espace de stockage de données utiles (120) et un espace de stockage correspondant de codes détecteur d'erreurs ou codes correcteur d'erreurs (125), appelés codes d'erreurs, le procédé comprenant,
- une mémorisation d'un indicateur d'état dans un emplacement de l'espace de stockage de codes d'erreurs, l'indicateur d'état mémorisé étant indépendant d'une donnée utile mémorisée dans un emplacement correspondant de l'espace de stockage de données utiles et étant représentatif d'un état de l'emplacement de l'espace de stockage de données utiles et
- une détection d'une erreur d'accès mémoire dans un emplacement de l'espace de stockage de données utiles en fonction d'un indicateur d'état mémorisé dans un emplacement correspondant de l'espace de stockage de codes d'erreurs.

## Description

Des modes de réalisation concernent le domaine de la fiabilité et de la sécurité des programmes d'ordinateurs ou logiciels, en particulier des logiciels embarqués, et notamment le développement de logiciels embarqués utilisant des langages de programmation peu fiables en termes d'accès mémoire.

Le développement de logiciels embarqués est un processus souvent long et coûteux, notamment en ce que ces logiciels peuvent être difficiles à déboguer.

Les langages de programmation couramment utilisés, tels que le langage C et le langage C++, sont efficaces et flexibles, mais ils ne sont pas fiables en ce qui concerne les accès mémoire, en écriture et/ou en lecture. Un défaut de fiabilité des accès mémoire pose des problèmes dans la mesure où des erreurs d'accès mémoire peuvent conduire à des crashs informatiques irrécupérables et/ou à des vulnérabilités de sécurité.

Des solutions répondant à ces problématiques, permettant à un développeur de contrôler les accès mémoire et identifier d'éventuelles erreurs, consistent à ajouter des instructions, par exemple lors de la compilation, dans un outil de génération de codes, ou durant des étapes de désassemblage et ré-encodage, à des emplacements particuliers du logiciel, pour étudier le comportement de ce dernier et de ses accès mémoire.

Cependant, ces solutions sont souvent complexes à mettre en œuvre et nécessitent un environnement de test particulier utilisant généralement un système d'exploitation perfectionné. En outre, ces solutions requièrent des ressources importantes en termes de puissance de calcul et de mémoire.

Il existe donc un besoin pour un procédé et un dispositif de contrôle des accès mémoire durant le développement de logiciels embarqués.

Selon un aspect, il est proposé un procédé de contrôle d'accès mémoire pour un programme d'ordinateur embarqué, en phase de développement, le programme d'ordinateur étant exécuté dans un dispositif comprenant au moins une unité de mémoire, ladite au moins une unité de mémoire comprenant au moins un espace de stockage de données utiles et un espace de stockage correspondant de codes détecteur d'erreurs ou codes correcteur d'erreurs, appelés codes d'erreurs.

Selon des modes de réalisation, le procédé comprend,
- une mémorisation d'un indicateur d'état dans un emplacement dudit espace de stockage de codes d'erreurs, l'indicateur d'état mémorisé étant indépendant d'une donnée utile mémorisée dans un emplacement correspondant dudit espace de stockage de données utiles et étant représentatif d'un état dudit emplacement dudit espace de stockage de données utiles et
- une détection d'une erreur d'accès mémoire dans un emplacement dudit espace de stockage de données utiles en fonction d'un indicateur d'état mémorisé dans un emplacement correspondant dudit espace de stockage de codes d'erreurs.

Un tel procédé permet de faciliter le développement de logiciels embarqués en simplifiant la détection d'erreurs d'accès mémoire, sans modification substantielle du système embarqué ni ressources spécifiques additionnelles et sans recourir à un système d'exploitation évolué.

Selon des modes de réalisation, le procédé comprend une étape d'initialisation dudit espace de stockage de codes d'erreurs, ladite étape d'initialisation comprenant une mémorisation d'un indicateur d'état dans chaque emplacement dudit espace de stockage de codes d'erreurs, ledit indicateur d'état mémorisé dans chacun desdits emplacements étant représentatif d'un défaut d'allocation d'un emplacement correspondant dudit espace de stockage de données utiles.

Un tel procédé permet ainsi d'identifier un emplacement de l'espace de stockage de données utiles qui n'a pas été alloué et donc de détecter une erreur d'accès liée à un tel emplacement.

Selon des modes de réalisation, le procédé comprend une étape d'allocation, audit programme d'ordinateur, d'au moins une partie dudit espace de stockage de données utiles, ladite allocation comprenant une mémorisation d'un indicateur d'état dans chaque emplacement dudit espace de stockage de codes d'erreurs correspondant à l'au moins une partie dudit espace de stockage de données utiles, ledit indicateur d'état mémorisé dans chacun desdits emplacements dudit espace de stockage de codes d'erreurs correspondant à l'au moins une partie dudit espace de stockage de données utiles étant représentatif d'une allocation d'un emplacement correspondant dudit espace de stockage de données utiles.

Un tel procédé permet ainsi d'identifier un emplacement de l'espace de stockage de données utiles qui a été alloué, mais dont un contenu n'a pas été initialisé, et donc de détecter une erreur d'accès liée à un tel emplacement.

Selon des modes de réalisation, le procédé comprend en outre une étape de désallocation d'au moins une partie dudit espace de stockage de données utiles, ladite désallocation comprenant une mise à jour d'un indicateur d'état dans chaque emplacement dudit espace de stockage de codes d'erreurs correspondant à l'au moins une partie dudit espace de stockage de données utiles à désallouer, ledit indicateur d'état mis à jour dans chacun desdits emplacements dudit espace de stockage de codes d'erreurs correspondant à l'au moins une partie dudit espace de stockage de données utiles à désallouer étant représentatif d'un défaut d'allocation d'un emplacement correspondant dudit espace de stockage de données utiles.

Un tel procédé permet ainsi d'identifier un emplacement de l'espace de stockage de données utiles qui n'a pas été alloué ou qui a été libéré et donc de détecter une erreur d'accès lié à un tel emplacement.

Selon des modes de réalisation, le procédé comprend en outre une étape d'initialisation d'une valeur mémorisée dans un emplacement dudit espace de stockage de données utiles, ladite initialisation de la valeur mémorisée comprenant une mémorisation d'un indicateur d'état dans un emplacement dudit espace de stockage de codes d'erreurs correspondant audit emplacement dudit espace de stockage de données utiles dont la valeur est initialisée, ledit indicateur d'état mémorisé dans un emplacement dudit espace de stockage de codes d'erreurs correspondant audit emplacement dudit espace de stockage de données utiles dont la valeur est initialisée étant représentatif d'une initialisation d'une valeur dudit espace de stockage de données utiles.

Un tel procédé permet ainsi d'identifier un emplacement de l'espace de stockage de données utiles qui a été alloué et dont un contenu a été initialisé.

Selon des modes de réalisation, ledit indicateur d'état mémorisé dans un emplacement dudit espace de stockage de codes d'erreurs correspondant audit emplacement dudit espace de stockage de données utiles dont la valeur est initialisée comprend une pluralité d'éléments, chaque élément de ladite pluralité étant représentatif d'un état d'initialisation d'une valeur codée dans une partie dudit emplacement dudit espace de stockage de données utiles dont la valeur est initialisée.

Un tel procédé peut ainsi s'adapter à différentes longueurs de codage de données dans un emplacement de l'espace de stockage de données utiles.

Selon un autre aspect, il est proposé un programme d'ordinateur comprenant des instructions pour exécuter chacune des étapes du procédé décrit précédemment. Les avantages procurés par ce programme d'ordinateur sont similaires à ceux évoqués ci-dessus.

Toujours selon un autre aspect, il est proposé un contrôleur de mémoire pour un système embarqué pourvu d'au moins une unité de mémoire comprenant au moins un espace de stockage de données utiles et un espace de stockage correspondant de codes détecteur d'erreurs ou codes correcteur d'erreurs, appelés codes d'erreurs. Selon des modes de réalisation, le contrôleur de mémoire comprend un module de gestion d'indicateurs d'état, le module de gestion d'indicateurs d'état étant configuré pour
- mémoriser un indicateur d'état dans un emplacement dudit espace de stockage de codes d'erreurs, l'indicateur d'état mémorisé étant indépendant d'une donnée utile mémorisée dans un emplacement correspondant dudit espace de stockage de données utiles et étant représentatif d'un état dudit emplacement dudit espace de stockage de données utiles et
- détecter une erreur d'accès mémoire dans un emplacement dudit espace de stockage de données utiles en fonction d'un indicateur d'état mémorisé dans un emplacement correspondant dudit espace de stockage de codes d'erreurs.

Un tel contrôleur de mémoire permet de faciliter le développement de logiciels embarqués en simplifiant la détection d'erreurs d'accès mémoire, sans modification substantielle du système embarqué ni ressources spécifiques additionnelles et sans recourir à un système d'exploitation évolué.

Selon un autre aspect encore, il est proposé un système embarqué comprenant un contrôleur de mémoire comme décrit précédemment. Les avantages procurés par ce système embarqué sont similaires à ceux évoqués ci-dessus.

Selon des modes de réalisation, le système embarqué comprend en outre un module de gestion d'erreurs pour détecter et/ou corriger des erreurs de lecture de données, le système embarqué comprenant en outre un module de sélection pour sélectionner le module de gestion d'indicateurs d'état dans un mode de développement et sélectionner le module de gestion d'erreurs dans un mode d'exploitation.

D'autres avantages et caractéristiques apparaîtront à l'examen de la description détaillée de modes de réalisation et de mise en œuvre, nullement limitatifs, et des dessins annexés sur lesquels :
[Fig 1] ;
[Fig 2] ;
[Fig 3] ;
[Fig 4] ;

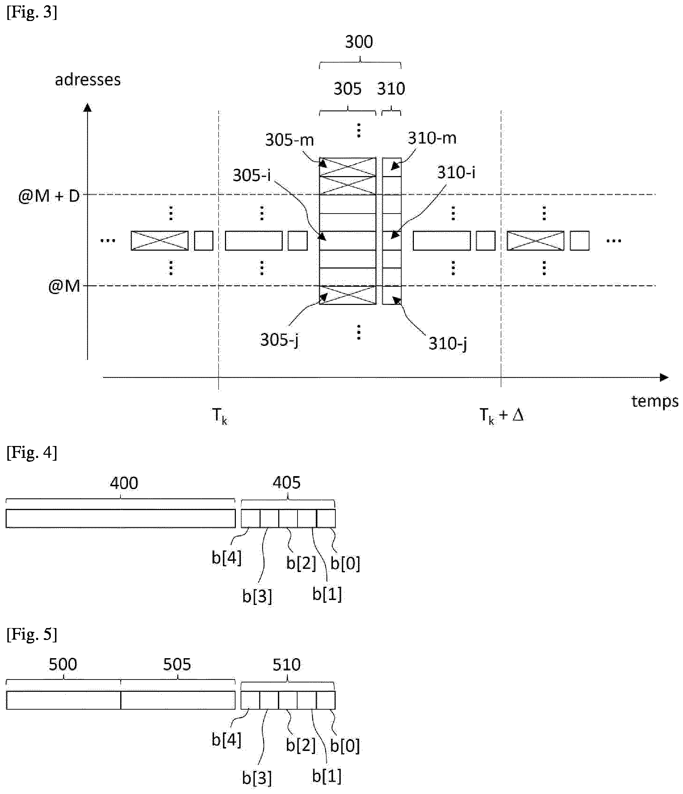

[Fig 5] illustrent des modes de réalisation.

Selon des modes de réalisation, un statut est associé à chaque emplacement d'au moins une partie d'une unité de mémoire d'un système embarqué, durant une phase de développement ou de test d'un programme d'ordinateur ou logiciel. Ce statut peut notamment indiquer si l'emplacement a été alloué et/ou si l'emplacement a été initialisé. Il permet d'identifier des accès mémoire erronés, par exemple des accès mémoire à un emplacement qui n'a pas été alloué ou initialisé. Ces emplacements peuvent notamment être des emplacements de mémoire pour des données ou des instructions. Ils peuvent être alloués dynamiquement ou non.

Toujours selon des modes de réalisation, le statut est mémorisé dans un emplacement de la mémoire du système embarqué qui est utilisée, lorsque le logiciel est exécuté dans un mode d'exploitation, pour stocker des codes correcteurs d'erreurs (ECC, Error Correction Code en terminologie anglo-saxonne) ou des codes détecteurs d'erreurs (EDC, Error Detection Code en terminologie anglo-saxonne). De tels codes, aussi appelés données de redondance, sont généralement stockés sur 7 bits pour détecter et/ou corriger des erreurs dans des mots de 32 bits.

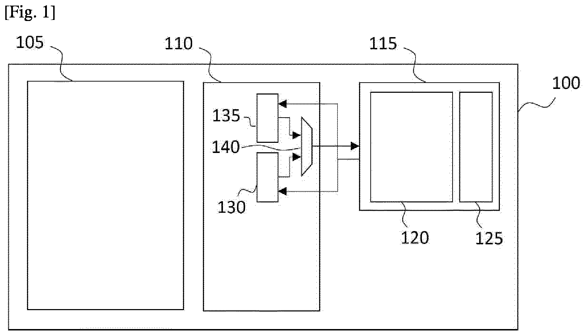

La figure 1 illustre schématiquement une partie d'un système embarqué 100. Comme illustré, le système embarqué 100 comprend notamment un microprocesseur 105, un contrôleur de mémoire 110 et au moins une unité de mémoire 115 comprenant elle-même une première partie 120 pour stocker des données utiles ou des instructions (payload en terminologie anglo-saxonne), par exemple codés sur 32 bits, et une seconde partie 125 pour stocker des codes correcteurs d'erreurs ou des codes détecteurs d'erreurs, appelés codes d'erreurs par la suite, par exemple codés sur 7 bits.

Le contrôleur de mémoire 110 comprend ici un module standard de gestion de redondance 130 ayant notamment pour objet de calculer un code d'erreurs lors de l'écriture d'une donnée en mémoire et de détecter et/ou corriger une erreur lors de la lecture d'une donnée. Le contrôleur de mémoire 110 comprend également un module de gestion d'indicateurs d'états 135 pour contrôler le stockage d'un indicateur d'états, accéder à un indicateur d'états préalablement stocké et interpréter un indicateur d'état accédé. Selon l'exemple illustré, le contrôleur de mémoire 110 comprend en outre un module de sélection 140 pour sélectionner le module standard de gestion de redondance 130 ou le module de gestion d'indicateurs d'états 135, par exemple en fonction d'un mode d'utilisation du système embarqué.

Dans un mode d'exploitation, le module de sélection 140 sélectionne le module standard de gestion de redondance 130 pour calculer et stocker un code d'erreurs lors de l'écriture d'une donnée en mémoire et pour détecter et/ou corriger une erreur d'une donnée accédée en mémoire. Dans un mode de développement, le module de sélection 140 sélectionne le module de gestion d'indicateurs d'états 135 pour stocker, dans un emplacement de la seconde partie 125 de l'unité de mémoire 115, une donnée caractérisant un état d'un emplacement correspondant de la première partie 120 de l'unité de mémoire 115, pour accéder à une telle donnée caractérisant un état et pour détecter une anomalie d'accès à un emplacement de la première partie 120 de l'unité de mémoire 115, par exemple si cet emplacement n'a pas été alloué ou n'a pas été initialisé.

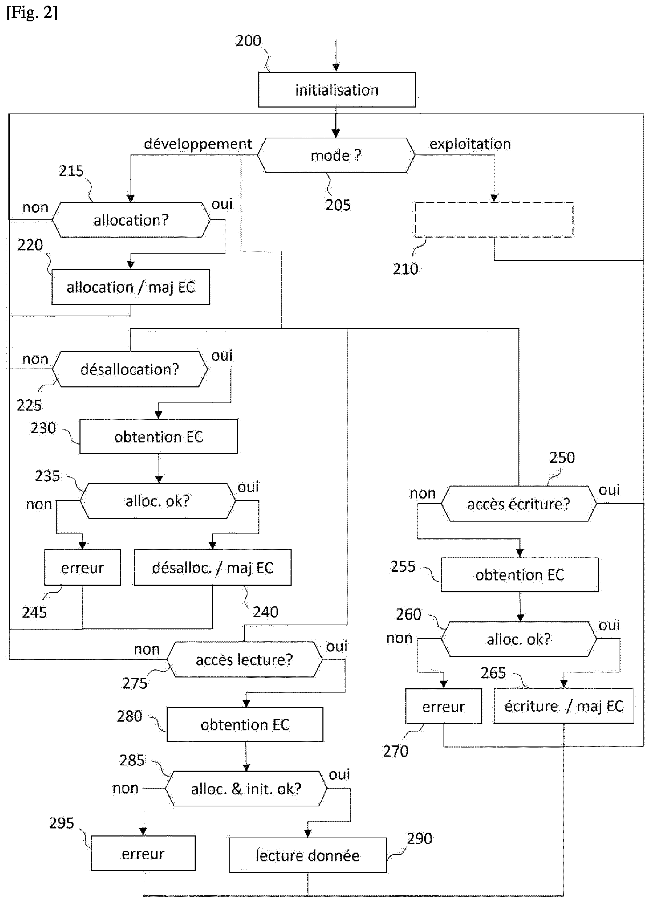

La figure 2 illustre un exemple d'étapes pour contrôler un accès à au moins une partie d'une unité de mémoire, dans un mode de développement d'un logiciel dans un système embarqué tel que celui illustré sur la figure 1.

Selon cet exemple, une première étape (étape 200) a pour objet d'initialiser une seconde partie d'une unité de mémoire utilisée pour stocker des données représentatives d'un état d'une première partie d'une unité de mémoire. Selon des modes de réalisation, chaque emplacement de la seconde partie de l'unité de mémoire est utilisé pour stocker une donnée représentative d'un état, appelé indicateur d'état, d'un emplacement correspondant de la première partie de l'unité de mémoire. La seconde partie de l'unité de mémoire est par exemple celle utilisée pour stocker des codes d'erreurs dans un mode d'exploitation du système embarqué. Les première et seconde parties sont par exemple les parties 120 et 125 de la figure 1, respectivement. La partie de l'unité de mémoire utilisée pour stocker des données représentatives d'un état d'une autre partie d'une unité de mémoire est par exemple initialisée avec la valeur zéro signifiant que les emplacements correspondant de l'autre partie de l'unité de mémoire n'ont pas été alloués à une application.

Le mode de fonctionnement du système embarqué est déterminé dans une étape suivante (étape 205). Cette étape peut être mise en œuvre lors de lancement d'une application, par exemple d'une application en cours de développement ou d'une application testée, lors du lancement d'un module de cette application ou lors de la réception d'une commande d'accès mémoire issue, directement ou non, de cette application. Si le mode de fonctionnement est un mode d'exploitation, la mémoire est accédée de façon standard (étape 210). Si, au contraire, le mode de fonctionnement est un mode de développement ou de test d'un logiciel embarqué, une étape suivante a pour objet de déterminer la nature d'une commande reçue à traiter.

Si la commande reçue est une commande d'allocation de mémoire (étape 215), pour des instructions ou des données, une quantité de mémoire d'une partie d'une unité de mémoire, par exemple la partie de mémoire 120 sur la figure 1, définie selon la commande reçue, est allouée (étape 220), de façon standard. En outre, durant cette étape, un indicateur d'état représentant l'état de chaque emplacement alloué est stocké dans un emplacement correspondant à l'emplacement alloué, par exemple dans un emplacement mémoire utilisé, en mode d'exploitation, pour stocker un code d'erreur, comme décrit précédemment. Un indicateur d'état représentant un état alloué est par exemple codé sur un bit, la valeur zéro indiquant un emplacement non-alloué et la valeur un indiquant un emplacement alloué. D'autres valeurs peuvent être utilisées. Il peut s'agir du cinquième bit de l'indicateur d'état qui correspond au code d'erreurs normalement mémorisé dans la mémoire utilisée, en mode d'exploitation, pour stocker un code d'erreurs (b[4]=1 après allocation).

Si la commande reçue est une commande de libération de mémoire (étape 225), aussi appelée désallocation de mémoire, la ou les adresses des emplacements de mémoire à désalloués sont obtenues. La ou les adresses obtenues sont alors utilisées pour récupérer le ou les indicateurs d'état dans le ou les emplacements correspondants (étape 230), par exemple dans la partie de mémoire 125 sur la figure 1.

Un test est alors effectué pour déterminer si le ou les emplacements de la mémoire devant être désalloués ont été précédemment alloués (étape 235). Selon des modes de réalisation, la valeur du ou des indicateurs d'état récupérés est utilisée pour déterminer si le ou les emplacements de la mémoire devant être désalloués ont été précédemment alloués. Selon l'exemple précédent, si la valeur du cinquième bit de l'indicateur d'état est égale à un, l'emplacement correspondant a été alloué et si elle est égale à zéro, il n'a pas été alloué.

Si le ou les emplacements de la mémoire devant être désalloués ont été précédemment alloués, une quantité de mémoire d'une partie d'une unité de mémoire, par exemple la partie de mémoire 120 sur la figure 1, définie selon la commande reçue, est désallouée (étape 240), de façon standard. En outre, durant cette étape, l'indicateur d'état associé à chaque emplacement désalloué, stocké dans un emplacement correspondant à l'emplacement désalloué, par exemple dans un emplacement mémoire utilisé, en mode d'exploitation, pour stocker un code d'erreur, est modifié pour représenter le nouvel état (non-alloué). Comme décrit précédemment, une donnée représentative d'un état non-alloué (emplacement non encore alloué ou précédemment alloué, mais libéré) est par exemple codée sur un bit, la valeur zéro indiquant un emplacement non-alloué et la valeur un indiquant un emplacement alloué. A nouveau, d'autres valeurs peuvent être utilisées et il peut s'agir du cinquième bit de l'indicateur d'état qui correspond au code d'erreurs normalement mémorisé dans la mémoire utilisée, en mode d'exploitation, pour stocker un code d'erreurs (b[4]=0 après désallocation.

Au contraire, si le ou les emplacements de la mémoire devant être désalloués n'ont pas été précédemment alloués ou ont été désalloués depuis leur dernière allocation (e.g., si la valeur du cinquième bit de l'indicateur d'état est égale à zéro), une erreur est détectée (étape 245). Selon des modes de réalisation, une interruption est générée pour indiquer l'erreur. Toujours selon des modes de réalisation, une indication relative à l'erreur est transmise, par exemple pour indiquer une tentative de désallocation d'un emplacement non-alloué.

Si la commande reçue est une commande d'accès mémoire pour écrire une ou plusieurs données (étape 250) à un ou plusieurs emplacements d'une unité de mémoire, par exemple la partie de mémoire 120 sur la figure 1, la ou les adresses de ces emplacements sont obtenues. La ou les adresses obtenues sont alors utilisées pour récupérer le ou les indicateurs d'état dans le ou les emplacements correspondants (étape 255), par exemple dans la partie de mémoire 125 sur la figure 1.

Un test est alors effectué pour déterminer si le ou les emplacements de la mémoire dans lesquels une ou plusieurs données doivent être écrites ont été alloués (étape 260). Selon des modes de réalisation, la valeur du ou des indicateurs d'état récupérés est utilisée pour déterminer si le ou les emplacements de la mémoire dans lesquels une ou plusieurs données doivent être écrites ont été alloués. Selon l'exemple précédent, si la valeur du cinquième bit de l'indicateur d'état est égale à un, l'emplacement correspondant a été alloué et si elle est égale à zéro, il n'a pas été alloué.

Si le ou les emplacements de la mémoire dans lesquels une ou plusieurs données doivent être écrites ont été alloués, la ou les données sont écrites (étape 265). En outre, la valeur du ou des indicateurs d'état récupérés est changée, dans le ou les emplacements correspondant à l'emplacement ou aux emplacements dans lesquels la ou les données sont écrites, pour indiquer que des données ont été écrites et que, par conséquent, la valeur mémorisée dans ce ou ces emplacements a été initialisée. Comme décrit en référence à la figure 4, une donnée représentative d'un état initialisé est par exemple codée sur 4 bits, chaque bit étant associé à un octet, la valeur zéro indiquant un emplacement non-initialisé et la valeur un indiquant un emplacement initialisé. Il peut s'agir des quatre premiers bits de l'indicateur d'état qui correspond au code d'erreurs normalement mémorisé dans la mémoire utilisée, en mode d'exploitation, pour stocker un code d'erreurs (b[0-3]=1 après initialisation des quatre octets).

Si le ou les emplacements de la mémoire dans lesquels une ou plusieurs données doivent être écrites n'ont pas été alloués (e.g., si la valeur du cinquième bit de l'indicateur d'état est égale à zéro), une erreur est détectée (étape 270). Selon des modes de réalisation, une interruption est générée pour indiquer l'erreur. Toujours selon des modes de réalisation, une indication relative à l'erreur est transmise, par exemple pour indiquer une tentative d'écriture d'une donnée à un emplacement non-alloué.

Si la commande reçue est une commande d'accès mémoire pour lire une ou plusieurs données (étape 275) à un ou plusieurs emplacements d'une unité de mémoire, par exemple la partie de mémoire 120 sur la figure 1, la ou les adresses de ces emplacements sont obtenues. La ou les adresses obtenues sont alors utilisées pour récupérer le ou les indicateurs d'état dans le ou les emplacements correspondants (étape 280), par exemple dans la partie de mémoire 125 sur la figure 1.

Un test est alors effectué pour déterminer si le ou les emplacements de la mémoire dans lesquels une ou plusieurs données doivent être lues ont été alloués et initialisés (étape 285). Selon des modes de réalisation, la valeur du ou des indicateurs d'état récupérés est utilisée pour déterminer si le ou les emplacements de la mémoire dans lesquels une ou plusieurs données doivent être lues ont été alloués et initialisés. Selon l'exemple précédent et selon la taille et la position de la donnée ou des données à lire, si la valeur du premier, deuxième, troisième et/ou quatrième bits de l'indicateur d'état est égale à un, l'emplacement correspondant a été alloué et initialisé.

Si le ou les emplacements de la mémoire dans lesquels une ou plusieurs données doivent être lues ont été alloués et initialisés, la ou les données sont lues (étape 290). Au contraire, si le ou les emplacements de la mémoire dans lesquels une ou plusieurs données doivent être lues n'ont pas été alloués et initialisés, une erreur est détectée (étape 295). Selon des modes de réalisation, une interruption est générée pour indiquer l'erreur. Toujours selon des modes de réalisation, une indication relative à l'erreur est transmise, par exemple pour indiquer une tentative de lecture d'une donnée à un emplacement non-initialisé.

Selon la mise en œuvre du module de sélection, les étapes 220, 240, 245, 265, 270, 290 et 295 peuvent boucler vers la boîte 205 pour prendre en compte un éventuel changement de mode ou vers les boîtes 215, 225, 250 et 275 (i.e., la sortie « développement » de la boîte 205) s'il n'y a pas lieu d'envisager un changement de mode.

Selon des modes de réalisation, les étapes illustrées sur la figure 2 ou certaines de ces étapes sont mises en œuvre par le microprocesseur 105 illustré sur la figure 1. Toujours selon des modes de réalisation, ces étapes ou certaines de ces étapes sont mises en œuvre dans un environnement de test spécifique. Toujours selon des modes de réalisation, certaines de ces étapes sont mises en œuvre à l'aide d'une logique câblée du système embarqué.

La figure 3 illustre schématiquement une unité de mémoire 300 d'un système embarqué, comprenant une première partie 305 configurée pour stocker des données utiles ou des instructions et une seconde partie 310 configurée pour stocker des codes correcteurs d'erreurs ou des codes détecteurs d'erreurs (codes d'erreurs). Comme illustré, le contenu de l'unité de mémoire 300 varie au cours du temps. A titre d'illustration, l'emplacement 305-i contient une donnée ou une instruction valide entre les instants Tk et Tk+Δ, mais ne contient pas de donnée ou d'instruction valide avant l'instant Tk (par exemple si l'adresse n'a pas été allouée ou initialisée) et après l'instant Tk+Δ (par exemple si l'adresse a été libérée). De même, le contenu de l'unité de mémoire 300 varie dans l'espace. Toujours à titre d'illustration, les adresses M à M+D contiennent des données ou instructions valides entre les instants Tk et Tk+Δ, mais les adresses précédent l'adresse M et suivant l'adresse M+D ne contiennent pas de données ou instructions valides.

Dans un mode d'exploitation, le logiciel exécuté dans le système embarqué comprenant l'unité de mémoire 300 utilise la partie 305 pour écrire et lire des données ou instructions utiles. Le système embarqué comprend par ailleurs un mécanisme de redondance, comprenant des modules de détection et de correction d'erreur, faisant appel à la partie 310 pour détecter et/ou corriger des données ou instructions stockées qui seraient erronées. Ainsi, lorsqu'une donnée ou une instruction est stockée dans la partie 305 de l'unité de mémoire 300, par exemple à l'adresse 305-i, le mécanisme de redondance calcule un code d'erreur qui est stocké dans un emplacement correspondant de la partie 310, ici l'emplacement 310-i. Lorsqu'une donnée ou une instruction doit être obtenue de la partie 305 de l'unité de mémoire 300, par exemple à l'adresse 305-i, le mécanisme de redondance calcul un code d'erreur à partir de la donnée ou de l'instruction stockée à cet emplacement et le compare avec le code d'erreur précédemment calculé et stocké dans l'emplacement correspond de la partie 310, ici l'emplacement 310-i. Si les codes d'erreurs sont identiques, la donnée ou l'instruction obtenue est transmise au logiciel. Dans le cas contraire, elle est corrigée avant d'être transmise ou, si elle ne peut être corrigée, un signal d'erreur est transmis au logiciel.

Dans un mode de développement, le mécanisme de redondance est désactivé au profit d'un mécanisme de contrôle d'états de l'unité de mémoire, qui utilise les emplacements prévus pour stocker des codes d'erreurs pour mémoriser des indicateurs d'états des emplacements correspondant dans la mémoire utilisée pour stocker des données utiles ou instructions, comme décrit en référence à la figure 2, afin de détecter d'éventuelles erreurs d'accès mémoire. Lorsqu'une donnée ou une instruction doit être écrite dans la partie 305 de l'unité de mémoire 300 ou lue, par exemple à l'adresse 305-i, le mécanisme de contrôle d'états vérifie que l'état de cet emplacement est compatible avec l'opération demandée. A titre d'illustration, il est considéré ici que la valeur de l'état stocké dans l'emplacement 310-i indique que l'emplacement 305-i a été alloué et initialisé. Par conséquent, une donnée peut être lue ou écrite à cet emplacement. Toujours à titre d'illustration, il est considéré ici que la valeur de l'état stocké dans l'emplacement 310-j indique que l'emplacement 305-j a été alloué mais n'a pas été initialisé. Par conséquent, une donnée ne peut pas être lue à cet emplacement, mais peut être écrite. A titre d'illustration encore, il est considéré que la valeur de l'état stocké dans l'emplacement 310-m indique que l'emplacement 305-m n'a pas été alloué et, a fortiori, n'a pas été initialisé. Par conséquent, une donnée ne peut ni être lue ni être écrite à cet emplacement.

Les figures 4 et 5 illustrent un exemple de codage d'une valeur d'un indicateur d'état, représentatif d'un état d'un emplacement d'une unité de mémoire utilisée pour stocker des données utiles ou des instructions. Selon l'exemple illustré, chaque emplacement d'une unité de mémoire utilisée pour stocker des données utiles ou des instructions permet de stocker un mot de 32 bits. Chaque emplacement peut donc être utilisé pour stocker une donnée utile ou une instruction de 32 bits, stocker deux données utiles ou instructions de 16 bits, stocker quatre données utiles ou instructions de 8 bits, etc.

L'état d'un emplacement est ici caractérisé par 5 bits, un bit caractérisant l'état alloué ou non de l'emplacement et quatre bits caractérisant chacun l'état initialisé ou non de chacun des quatre octets du mot de 32 bits pouvant être stocké à cet emplacement.

Selon l'exemple illustré sur la figure 4, un emplacement d'une unité de mémoire utilisée pour stocker des données utiles ou des instructions stocke un mot 400 de 32 bits. L'emplacement correspondant, dans une partie d'une unité de mémoire normalement utilisé pour stocker des codes d'erreurs, est utilisé pour stocker un indicateur d'état, par exemple sur 5 bits, chacun des 4 premiers bits (b[0] à b[3]) correspondant à l'indication selon laquelle chacun des 4 octets du mot de 32 bits a été initialisé ou non, respectivement, et le cinquième bit (b[4]) correspondant à l'indication selon laquelle l'emplacement du mot de 32 bits a été alloué ou non.

Selon cet exemple, si un emplacement n'a pas été alloué, l'état est 00000, si l'emplacement a été alloué mais pas initialisé, l'état est 10000 et si l'emplacement a été alloué et initialisé, l'état est 11111. D'autres codages peuvent être utilisés. A titre d'illustration, les bits b[1] à b[3] peuvent être ignorés ou utilisés à d'autres fins.

Selon l'exemple illustré sur la figure 5, un emplacement d'une unité de mémoire utilisée pour stocker des données utiles ou des instructions stocke deux mots 500 et 505 de 16 bits chacun. A nouveau, l'emplacement correspondant, dans une partie d'une unité de mémoire, normalement utilisé pour stocker des codes d'erreurs, est utilisé pour stocker un indicateur d'état, ici sur 5 bits, chacun des 4 premiers bits (b[0] à b[3]) correspondant à l'indication selon laquelle chacun des 4 octets du mot de 32 bits a été initialisé ou non, respectivement, et le cinquième bit (b[4]) correspondant à l'indication selon laquelle l'emplacement du mot de 32 bits a été alloué ou non.

Selon cet exemple, si un emplacement n'a pas été alloué, l'état est 00000, si l'emplacement a été alloué mais pas initialisé, l'état est 10000, si l'emplacement a été alloué, mais qu'une seule des données ou instructions est initialisé, l'état est 10011 ou 11100 et si l'emplacement a été alloué et que les deux données ou instructions ont été initialisées, l'état est 11111. A nouveaux, d'autres codages peuvent être utilisés. A titre d'illustration, les bits b[1] et b[3] peuvent être ignorés ou utilisés à d'autres fins.

De la même façon, lorsqu'un mot de 32 bits est utilisé pour mémoriser quatre données ou instructions codées sur 8 bits, chacun des quatre bits de l'indicateur d'état peut être utilisé pour indiquer si la valeur de la donnée ou de l'instruction correspondante a été initialisée.

Il est observé ici que si, selon les exemples précédents, les emplacements de l'unité de mémoire permettent de stocker des mots de 32 bits, le procédé décrit précédemment n'est pas limité à cette taille.

## Revendications

1. Procédé de contrôle d'accès mémoire pour un programme d'ordinateur embarqué, en phase de développement, le programme d'ordinateur étant exécuté dans un dispositif comprenant au moins une unité de mémoire (115), ladite au moins une unité de mémoire comprenant au moins un espace de stockage de données utiles (120) et un espace de stockage correspondant de codes détecteur d'erreurs ou codes correcteur d'erreurs (125), appelés codes d'erreurs, le procédé comprenant,
- une mémorisation (200, 220, 240, 265) d'un indicateur d'état dans un emplacement dudit espace de stockage de codes d'erreurs, l'indicateur d'état mémorisé étant indépendant d'une donnée utile mémorisée dans un emplacement correspondant dudit espace de stockage de données utiles et étant représentatif d'un état dudit emplacement dudit espace de stockage de données utiles et
- une détection (235, 260, 285) d'une erreur d'accès mémoire dans un emplacement dudit espace de stockage de données utiles en fonction d'un indicateur d'état mémorisé dans un emplacement correspondant dudit espace de stockage de codes d'erreurs.

2. Procédé selon la revendication 1, comprenant une étape d'initialisation (200) dudit espace de stockage de codes d'erreurs, ladite étape d'initialisation comprenant une mémorisation d'un indicateur d'état dans chaque emplacement dudit espace de stockage de codes d'erreurs, ledit indicateur d'état mémorisé dans chacun desdits emplacements étant représentatif d'un défaut d'allocation d'un emplacement correspondant dudit espace de stockage de données utiles.

3. Procédé selon la revendication 1 ou la revendication 2, comprenant en outre une étape d'allocation (220), audit programme d'ordinateur, d'au moins une partie dudit espace de stockage de données utiles, ladite allocation comprenant une mémorisation d'un indicateur d'état dans chaque emplacement dudit espace de stockage de codes d'erreurs correspondant à l'au moins une partie dudit espace de stockage de données utiles, ledit indicateur d'état mémorisé dans chacun desdits emplacements dudit espace de stockage de codes d'erreurs correspondant à l'au moins une partie dudit espace de stockage de données utiles étant représentatif d'une allocation d'un emplacement correspondant dudit espace de stockage de données utiles.

4. Procédé selon l'une quelconque des revendications 1 à 3, comprenant en outre une étape de désallocation (240) d'au moins une partie dudit espace de stockage de données utiles, ladite désallocation comprenant une mise à jour d'un indicateur d'état dans chaque emplacement dudit espace de stockage de codes d'erreurs correspondant à l'au moins une partie dudit espace de stockage de données utiles à désallouer, ledit indicateur d'état mis à jour dans chacun desdits emplacements dudit espace de stockage de codes d'erreurs correspondant à l'au moins une partie dudit espace de stockage de données utiles à désallouer étant représentatif d'un défaut d'allocation d'un emplacement correspondant dudit espace de stockage de données utiles.

5. Procédé selon l'une quelconque des revendications 1 à 4, comprenant en outre une étape d'initialisation (265) d'une valeur mémorisée dans un emplacement dudit espace de stockage de données utiles, ladite initialisation de la valeur mémorisée comprenant une mémorisation d'un indicateur d'état dans un emplacement dudit espace de stockage de codes d'erreurs correspondant audit emplacement dudit espace de stockage de données utiles dont la valeur est initialisée, ledit indicateur d'état mémorisé dans un emplacement dudit espace de stockage de codes d'erreurs correspondant audit emplacement dudit espace de stockage de données utiles dont la valeur est initialisée étant représentatif d'une initialisation d'une valeur dudit espace de stockage de données utiles.

6. Procédé selon la revendication 5, selon lequel ledit indicateur d'état mémorisé dans un emplacement dudit espace de stockage de codes d'erreurs correspondant audit emplacement dudit espace de stockage de données utiles dont la valeur est initialisée comprend une pluralité d'éléments, chaque élément de ladite pluralité étant représentatif d'un état d'initialisation d'une valeur codée dans une partie dudit emplacement dudit espace de stockage de données utiles dont la valeur est initialisée.

7. Programme d'ordinateur comprenant des instructions pour exécuter chacune des étapes du procédé décrit dans les revendications 1 à 6 lorsqu'il est mis en œuvre dans une unité de calcul.

8. Contrôleur de mémoire (110) pour un système embarqué (100) pourvu d'au moins une unité de mémoire comprenant au moins un espace de stockage de données utiles (120) et un espace de stockage correspondant de codes détecteur d'erreurs ou codes correcteur d'erreurs (125), appelés codes d'erreurs, le contrôleur de mémoire comprenant un module de gestion d'indicateurs d'état, le module de gestion d'indicateurs d'état étant configuré pour
- mémoriser un indicateur d'état dans un emplacement dudit espace de stockage de codes d'erreurs, l'indicateur d'état mémorisé étant indépendant d'une donnée utile mémorisée dans un emplacement correspondant dudit espace de stockage de données utiles et étant représentatif d'un état dudit emplacement dudit espace de stockage de données utiles et
- détecter une erreur d'accès mémoire dans un emplacement dudit espace de stockage de données utiles en fonction d'un indicateur d'état mémorisé dans un emplacement correspondant dudit espace de stockage de codes d'erreurs.

9. Système embarqué (100) comprenant un contrôleur de mémoire selon la revendication 8.

10. Système embarqué selon la revendication 9, comprenant en outre un module de gestion d'erreurs pour détecter et/ou corriger des erreurs de lecture de données, le système embarqué comprenant en outre un module de sélection pour sélectionner le module de gestion d'indicateurs d'état dans un mode de développement et sélectionner le module de gestion d'erreurs dans un mode d'exploitation.
